(19) Europäisches Patentamt
European Patent Office
Office européen des brevets

(11) **EP 1 813 969 A1**

(12) **EUROPEAN PATENT APPLICATION**
published in accordance with Art. 158(3) EPC

(43) Date of publication:
**01.08.2007 Bulletin 2007/31**

(51) Int Cl.:
*G02B 5/08* (2006.01)   *C08J 9/00* (2006.01)
*C08K 3/22* (2006.01)   *C08K 3/26* (2006.01)
*C08K 3/30* (2006.01)   *C08K 9/02* (2006.01)
*C08L 67/00* (2006.01)   *G02F 1/1335* (2006.01)

(21) Application number: 05806004.7

(22) Date of filing: **10.11.2005**

(86) International application number:
**PCT/JP2005/020590**

(87) International publication number:
**WO 2006/054475 (26.05.2006 Gazette 2006/21)**

(84) Designated Contracting States:
**DE FR GB**

(30) Priority: **16.11.2004 JP 2004331448**
**16.11.2004 JP 2004331449**

(71) Applicant: **MITSUBISHI PLASTICS, INC.**
**Chiyoda-ku,**
**Tokyo 100-0005 (JP)**

(72) Inventors:
• **NISHIDA, Miki, MITSUBISHI PLASTICS, INC.**
**Nagahama-shi, Shiga 526-8660 (JP)**
• **WATANABE, Takayuki, MITSUBISHI PLASTICS, INC.**
**Nagahama-shi, Shiga 526-8660 (JP)**

• **HIRUMA, Takashi, MITSUBISHI PLASTICS, INC.**
**Nagahama-shi, Shiga 526-8660 (JP)**
• **KATSUHARA, Kazunari, MITSUBISHI PLASTICS, INC.**
**Nagahama-shi, Shiga 526-8660 (JP)**
• **TAKAGI, Jun, MITSUBISHI PLASTICS, INC.**
**Nagahama-shi, Shiga 526-8660 (JP)**

(74) Representative: **Albrecht, Thomas**
**Kraus & Weisert**
**Patent- und Rechtsanwälte**
**Thomas-Wimmer-Ring 15**
**80539 München (DE)**

(54) **ALIPHATIC POLYESTER RESIN REFLECTIVE FILM AND REFLECTOR PLATE**

(57)    [Problem] To provide a reflective film that has an excellent light reflectance, that hardly undergoes a decrease in light reflectance with time when in use.
[Means for solving] An aliphatic polyester-based resin reflective film formed by a resin composition containing an aliphatic polyester-based resin and a fine powder filler, wherein a yellowness index (YI-value) is less than 3.6. The fine powder filler is preferably at least one fine powder filler selected from the group of calcium carbonate, barium sulfate, titanium oxide and zinc oxide.

**Description**

TECHNICAL FIELD

The present invention relates to an aliphatic polyester-based resin reflective film and a reflective plate comprising the reflective film. More particularly, the present invention relates to a reflective film for use in a reflective plate and so on in a liquid crystal display device, a lightning apparatus, an illumination sign, and the like.

BACKGROUND ART

Recently, reflective films are used in the fields of a reflective plate for use in a liquid crystal display device, a member for a projection screen or a planar light source, a reflective plate for a lightning apparatus, an illuminated sign, and so on. In the case of, for example, reflective plates in liquid crystal displays, reflective films having high light reflectance are demanded in order to supply light to liquid crystals as much as possible to improve the performance of the backlight unit in response to the requirements of providing a larger screen of a liquid crystal device and higher displaying performance.

As a display device in, for example, a note-type computer, there has been used a liquid crystal display device provided with a backlight unit and liquid crystal display elements, which can be designed to have a reduced thickness and provide images that are easy to watch. Such backlight units mostly include backlight units of an edge-light system that has a transmission light guide plate provided on one end thereof a linear light source such as a fluorescent tube. In most of such edge-light systems, one side of the light guide plate is partially covered with a light diffusion material and that side is entirely covered with a reflective material to constitute a planar light source. Such a reflective material is required to have a high reflecting performance.

As a reflective film, a white sheet that Japanese Patent Application Laid-open No. 2002-138150 discloses, is known. The white sheet is formed by using titanium oxide and an aromatic polyester based resin. However, the sheet fail to provide the required high light reflectance. Also, a sheet that Japanese Patent Application Laid-open No. Hei 4-239540 discloses, is known, the sheet obtained by drawing a sheet made of an aromatic polyester based resin with the addition of a filler to form minute voids in the sheet to allow light scattering reflection. However, the film fails to provide the required high light reflectance. Further, the aromatic rings contained in the molecular chains of the aromatic polyester-based resin that constitutes the films absorb ultraviolet rays, so that the films are deteriorated and yellowed due to the ultraviolet rays from the light source of the liquid crystal display device and the like. This leads to the disadvantage of a reduced light reflectance of the reflective film.

Japanese Patent Application Laid-open No. Hei 11-174213 discloses a reflective film made from a polypropylene resin with the addition of an inorganic filler. Plastics such as polypropylene based resins are so stable for a long time in natural surroundings that discard plastics in a landfill remain in the soil for a long time and shorten the service life of garbage landfill. Further, the film made of polypropylene resin with the addition of inorganic fillers in amount of 60% or more by weight cannot ensure sufficient film strengths, so that such film tends to be broken during drawing and there is a disadvantage of leading to a decrease in productivity in film production.

Patent Document 1: Japanese Patent Application Laid-Open No. 2002-138150
Patent Document 2: Japanese Patent Application Laid-Open No. Hei 4-239540
Patent Document 3: Japanese Patent Application Laid-Open No. Hei 11-174213

DISCLOSURE OF THE INVENTION

Problems to be Solved by the Invention

The present invention has been achieved with a view to solving the above-mentioned problems. The object of the present invention is to provide a reflective film with excellent light reflectance, that hardly undergoes a decrease in light reflectance with time when in use.

Means for Solving the Problems

The aliphatic polyester-based resin reflective film of the present invention is characterized in that it is a reflective film formed by a resin composition containing an aliphatic polyester-based resin and a fine powder filler, wherein a yellowness index of the reflective film (YI-value) is less than 3.6.

Here, the fine powder filler may contain at least one fine powder filler selected from the group consiting of calcium carbonate, barium sulfate, titanium oxide, and zinc oxide.

In the present invention, preferably, a content of vanadium in the titanium oxide is 5 ppm or less.
A surface of the titanium oxide is preferably coated with at least one inert inorganic oxide selected from the group consisting of silica, alumina, and zirconia.

The content of the fine powder filler may be 10 mass% or more and 60 mass% or less in the resin composition.

In the present invention, the refractive index of the aliphatic polyester-based resins may be less than 1.52.
The aliphatic polyester-based resins preferably include polylactic acid-based resins.
The yellowness index (YI-value) of the aliphatic polyester-based resins may be 20 or less.

The aliphatic polyester-based resin reflective film of the present invention may have voids inside of the film such that the film has a void ratio of 50% or less.

In the present invention, the reflective film, which is obtained by melting film formation of the resin composition containing the aliphatic polyester based resin and the fine powder filler, may be drawn at least monoaxially 1.1 times or more.

The reflectance of the surface of the film is preferably 95% or more for light at a wavelength of 550 nm.

In the present invention, the resin composition may further contain a hydrolysis preventing agent such that an aliphatic carbodiimide compound. The aliphatic polyester-based resin reflective film may be formed from this resin composition.

The hydrolysis preventing agent may be a carbodiimide compound having an isocyanate group at the end thereof.

The content of the hydrolysis preventing agent may be 0.1 mass parts or more and 3.0 mass parts or less per 100 mass parts of the aliphatic polyester-based resin.

In the present invention, the reflectance of the surface of the aliphatic polyester-based resin reflective film may be 95% or more for light at a wavelength of 450nm.

The reflective plate of the present invention is featured by comprising any one of the above-mentioned aliphatic polyester-based resin reflective films.

The reflective plate can be used for a liquid crystal display device, a lightning apparatus, and an illumination sign.

Effects of the Invention

According to the present invention, a reflective film that has a high reflectance and hardly undergoes a decrease in light reflectance with time when in use can be obtained. A reflective plate can be obtained by applying any of the aliphatic polyester-based resin reflective film to a metal plate or a resin plate. The obtained reflective plate can be used for a liquid crystal display device, a lighting apparatus, an illumination sign and so on.

MODE FOR CARRYING OUT THE INVENTION

Hereinafter, the present invention will be explained in more detail. In the present invention, in accordance with the definition in Japanese Industrial Standards (JIS), "sheet" refers to a thin and flat product generally having a relatively small thickness as compared with its length and width, while "film" refers to a thin and flat product having an extremely small thickness as compared with its length and width and its maximum thickness is arbitrarily defined. The film is usually supplied in the form of a roll (Japan Industrial Standards JIS K 6900). Accordingly, among sheets, those having particularly small thickness may be termed as "film". However, there is no clear-cut boundary between "sheet" and "film". In the present invention, "film" is understood to include "sheet", and also "sheet" is understood to include "film".

The aliphatic polyester-based resin reflective film of the present invention is formed by a resin composition comprising an aliphatic polyester based resin and a fine powder filler as main components. The yellowness index (YI-value) of the aliphatic polyester-based resin reflective film is less than 3.6, preferably less than 3.5. When the yellowness index of the reflective film is less than 3.6, the liquid crystal display and the like incorporating this reflective film can have a clear and bright screen without yellowness.

In the present invention, the film may be prepared in any methods as long as the yellowness index (YI-value) of the film is less than 3.6. It seems that the yellowness index of the film may vary depending on, for example, the kind of base resins forming the aliphatic polyester-based resin reflective film, the kind or amount of impurities or metals, and the like in the film. In the present invention, the yellowness index (YI-value) of the base resin is preferably 20 or less. By using such base resin to form a reflective film, the yellowness index of the reflective film can be easily less than 3.6.

Since the yellowness index (YI-value) depends on the measurement methods, by decreasing the films measured can be exhibited smaller yellowness index (YI-value) in appearance. However, the thinner film generally results in lower reflectance. In the present invention, by choosing a kind of base resin or controlling a kind and/or an amount of impurities, the yellowness index of the film can be lowered without decreasing the thickness of the film to realize the excellent clear and bright screen and to improve the reflectance of the film.

The base resin constituting the reflective film of the present invention preferably has a refractive index (n) of less than 1.52. In the present invention, it is preferable to use an aliphatic polyester based resin with the refractive index (n) of less than 1.52.

The reflective film that contains the fine powder filler inside can realize light reflecting property by using refractive and scattering effects of light at the interface of the base resin and the fine powder filler. The greater the difference in refractive index between the base resin and the fine powder filler is, the greater the refractive and scattering effects become. The difference in refractive indexes is preferably 0.15 or more, and more preferably 0.20 or more. Therefore, the resin having a small refractive index is preferably used for a base resin in order to make a large difference in refractive indexes from that of a fine powder filler. When the resin with refractive index of less than 1.52 is used, it is easy to ensure the difference of 0.15 or more in the refractive indexes with that of the fine powder filler. Hence, aliphatic polyesters with refractive index of less than 1.52 are preferably used than aromatic polyesters containing aromatic ring(s) that have refractive indices of about 1.55 or more. Among aliphatic polyesters, polylactic acid-based resins with relatively small refractive index (less than 1.46) are preferably used.

Aliphatic polyester based resins do not contain aromatic rings in the molecular chains thereof and hence do not absorb ultraviolet rays. Therefore, the reflection films made thereof do not deteriorate nor yellow, maintaining the reflectance of the film even after being irradiated with ultraviolet rays form the light source of the liquid crystal display and the like.

The aliphatic polyester based resins used in the present invention may include those chemically synthesized, those obtained by fermentation by microorganisms and mixtures of those. Examples of the chemically synthesized aliphatic polyester based resins include poly($\varepsilon$-caprolaoton) obtained by ring-opening polymerization of lactone; polyethylene adipate, polyethylene azelate, polytetramethylene succinate, and cyclohexanedicarboxylic acid/cyclohexanedimethanol condensation products, etc. obtained by polymerization of a dibasic acid and a diol; polylactic acids based resin obtained by polymerizing hydroxycarboxylic acid; polyglycols; and aliphatic polyester based resins obtained by substituting a portion, for example, 50% or less of ester bonds in the above-mentioned aliphatic polyester based resins to be replaced by one or more of, for example, an amide bond, an ether bond, and a urethane bond. The aliphatic polyester based resins synthesized by fermentation by microorganisms include polyhydroxybutyrate, copolymers of hydroxybutyrate and hydroxyvalerate.

In the present invention, the term "polylactic acid based resin" means homopolymers of D-lactic acid or L-lactic acid, or copolymers of these. Specifically, polylactic acid based resins include poly(D-lactic acid) whose structural unit is D-lactic acid, poly(L-lactic acid) whose structural unit is L-lactic acid, and further, poly(DL-lactic acid) that is copolymer of L-lactic acid and D-lactic acid, and mixtures of these.

Polylactic acid based resins can be produced by known methods, such as a condensation polymerization method and a ring-opening polymerization method. For example, according to the condensation polymerization method, D-lactic acid, L-lactic acid, or mixtures of these are directly subjected to condensation polymerization with dehydration to obtain polylactic acid based resin having a desired composition. Further, by the ring opening polymerization method, apolylactio acid based resin having any desired composition can be obtained from a lactide, which is a cyclic dimer of lactic acid, in the presence of a predetermined catalyst and using a modifier as necessary. The above mentioned lactides include L-lactide, which is a dimer of L-lactic acid; D-lactide, which is a dimer of D-lactic acid; and DL-lactide, which is a dimmer of L-lactic acid and D-lactic acid. These can be mixed as necessary and polymerized to obtain polylactic acid based resins having any desired composition and crystallinity.

In polylactic acid based resins used in the present invention, preferable compositional ratio of D-lactic acid to L-lactic acid is 100:0 to 85:15, or 0:100 to 15:85, more preferably 99.5:0.5 to 95:5, or 0.5:99.5 to 5:95.

The polylactic acid based resins having a compositional ratio of D-laotio acid to L-lactic acid of 100:0 or 0:100 tend to have very high crystallinity, high melting point, excellent heat resistance, and excellent mechanical properties. Such polylactic acid based resins are preferable since upon their drawing or heat treatment the resins crystallize to improve the heat resistance and mechanical properties.

On the other hand, the polylactic acid based resins made of D-lactic acid and L-lactic acid are preferable, allowing the film to have flexibility to improve molding stability and drawing stability. Considering the balance between the heat resistance, molding stability, and drawing stability of the obtained film, in polylactic acid based resins used in the present invention, more preferable compositional ratio of D-lactic acid to L-lactic acid is 99.5:0.5 to 95:5 or 0.5:99.5 to 5:95.

In polymerization of polylactic acid-based resins, L-laotio acid and D-lactic acid are mixed to produce three kinds of dimers such as LL-lactide, DL-lactide, and DD-lactide. Then, at 260 ˚C, the dimers are mixed with octyl tin acid as a catalyst and polymerized to produce the polymer of LL-lactide and the polymer of DD-laotide, but to leave DL-lactide as a remained material. This DL-laotide as a remained material is used for the next polymerization.

For example to obtain poly(L-laotic acid), the excess heat history in adjusting a composition and the like during polymerization leads to color D-body. Thus, many heating histories cause further change in color of D-body, in result a yellowness index of the obtained polymer as an object increases. Therefore, to obtain the polylactic acid-based resins containing mainly of poly(L-lactic acid) with yellowness index (YI-value) of 20 or less, the content of D-body is preferably low, specifically, the polylactic aid-based resin containing D-laotic acid of which a mole ratio is less than 2.2% can achieve yellowness index (YI-value) to be 20 or less. The same is the case with the content of L-body to obtain poly(D-Lactic acid) with yellowness index of 20 or less, the mole ratio of L-lactic acid in poly(D-lactic acid) is preferably less than 2.2%.

Other factors to control yellowness index (YI) in polylactic acid-based resins include a residue of catalyst, purity of monomer, oligomer, metal contents such as iron, zinc and so on. It is recognized that for example, polylactic acid-based resins with high yellowness index (YI) can be washed by a solvent such as acetone to decrease the yellowness index (YI). It is supposed that this is because the content such as a residue of catalyst is dissolved.

In the present invention, polylactic acid based resins with different copolymerization ratios of D-laotio acid to L-lactic acid may be blended. In this case, the compositional ratios of the D-laotio acid and L-lactic acid may be advantageously adjusted such that an average value of the compositional ratios of a plurality of lactic acid-based resins falls within the above-mentioned ranges of the compositional ratio. Blending homopolymers of D-laotio acid and L-lactic acid and copolymers of these makes it possible to have bleed stability and development of heat resistance well balanced.

The polylactic acid-based resins used in the present invention preferably have high molecular weight, for example, weight-average molecular weight of preferably 10,000 or more, more preferably 50,000 or more, and particularly preferably 100,000 or more. The weight-average molecular weight of polylactic acid-based resin is preferably 400,000 or less, particulary preferably 300,000 or less. When the polylactic acid based resin has weight-average molecular weight of less than 10,000, the obtained film may have poor mechanical properties.

The resin composition forming the reflective film of the present invention contains a fine powder filler. The examples of the fine powder filler that be used in the present invention include an organic fine powder and an inorganic fine powder.

As an organic fine powder, at least one organic powder selected from the group of cellulosic powders like a wood flour and a pulp powder, polymer beads, hollow polymer beads, and the like is preferably used.

As an inorganic fine powder is preferably used at least one inorganic fine powder selected from the group of calcium carbonate, magnesium carbonate, barium carbonate, magnesium sulfate, barium sulfate, calcium sulfate, titanium oxide, zinc oxide, magnesium oxide, calcium oxide, alumina, aluminum hydroxide, hydroxyapatite, silica, mica, talc, kaolin, clay, aglasspowder, an asbestos powder, zeolite, clay silicate, and the like.

Taking into consideration the light reflecting property of the obtained film, a preferably used fine powder filler is one that has a large difference in refractive index from that of the base resin constituting the film. Hence, an inorganic fine powder having a large refractive index is preferably used. Specifically, it is more preferable to use calcium carbonate, barium sulfate, titanium oxide, or zinc oxide, having a refractive index of 1.6 or more. It is particularly preferable to use titanium oxide with reflective index of 2.5 or more. Moreover, taking into consideration a long term durability of the obtained film, barium sulfate which is stable with acid and alkali is preferably used.

High refractive index of titanium oxide allows large difference in refractive index from that of a base resin. Hence, the film can be imparted with a high reflecting property and low transparency of the film with a smaller blending amount than the case where a filler other than the titaniumu oxide is used. Further, when titanium oxide is used, a film having a high reflecting property and low transparency can be obtained even with a small film thickness.

The titanium oxides used in the present invention include those titanium oxides having a crystal structure, such as anatase-type titanium oxide and rutile-type titanium oxide. From the view point of increasing a difference in refractive index from the base resin that constitutes the film, the titanium oxide with a refractive index of 2.7 or more is preferable. For example, rutile-type titanium oxide having a crystal structure is preferably used. The greater the difference of refractive index, the effect of refraction and scattering of light at the border interface between the base resin and the titanium oxide becomes greater, so that the film can be imparted with light reflecting properties easily.

To provide a film with high light reflectivity, it is necessary to use titanium oxide having low absorbing performance for visible light. To decrease light absorbing performance of titanium oxide, it is preferable that the amount of coloring elements contained in the titanium oxide is small. For example, when titanium oxide having a vanadium content of 5 ppm or less is used, a reflective film having a high light reflectance can be obtained. Further, from the viewpoint of making light absorbing performance lower, it is preferable that the amounts of coloring elements contained in titanium oxide, such as iron, niobium, copper, and manganese are small.

Titanium oxide produced by a chlorine method has a high purity and this production method can afford titanium oxide having a vanadium content of 5 ppm or less. In the chlorine method, rutile ore whose main component is titanium oxide is allowed to react with chlorine gas in a high temperature furnace at about 1,000°C to first produce titanium tetrachloride. Then, the titanium tetrachloride is burned with oxygen to obtain high purity titanium oxide. Note that a sulfuric acid method is known to be a production method of titanium oxide on an industrial scale. However, titanium oxide obtained by this method contains a large amount of coloring elements such as vanadium, iron, copper, manganese, and niobium, so that the light absorbing performance for visible light becomes high.

A surface of the titanium oxide used in the present invention is preferably coated with an inert inorganic oxide.

By coating the surface of the titanium oxide with the inert inorganic oxide, the photocatalytic activity of titanium oxide can be suppressed, thereby increasing the light-resistance of the film. It is preferable to use at least one member selected from the group consisting of silica, alumina, and zirconia as the inert inorganic oxide. Use of these inert inorganic oxides can increase the light-resistance of films without deteriorating high light reflectance that is exhibited when titanium oxide is used. Further, it is more preferable that two or more inert inorganic oxides are used in combination. Among them, combinations that contain silica as an essential component are particularly preferable.

Alternatively, to improve the dispersibility of titanium oxide into the resin, the surface of the titanium oxide may be surface-treated with at least one inorganic compound selected from the group of siloxane compounds, silane coupling agents and so on; and/or at lease one organic compound elected from the group of polyols, polyethylene glycols, amine-compounds, fatty acids, fatty esters and so on.

Preferably, the titanium oxide used in the present invention has a particle diameter of 0.1 $\mu$m or more and 1 $\mu$m or less, more preferably 0.2 $\mu$m or more and 0.5 $\mu$m or less. When the particle diameter of the fine titanium oxide is 0.1 $\mu$m or more, the dispersibility of the fine titanium oxide in the aliphatic polyester-based resin is good, so that a uniform film can be obtained therefrom. On the other hand, when the particle diameter of the fine titanium oxide is 1 $\mu$m or less, the interface between the aliphatic polyester-based resin and the titanium oxide is formed densely, so that the reflective films can be imparted a high light reflectance.

When fine powder fillers other than titanium oxide are used, to improve the dispersibility of the fine powder fillers in the resin, the surface of the fine powder fillers may be treated with silicon-based compounds, polyhydric alcohol-based compounds, amine compounds, fatty acids, and fatty acid esters and so on. Also, the surface of fine powder fillers is preferably coated with inert inorganic oxides.

The fine powder filler preferably has an average particle diameter of 0.05$\mu$m or more and 15 $\mu$m or less, more preferably 0.1$\mu$m or more and 10 $\mu$m or less. The average particle diameter of the fine powder filler of 0.05 $\mu$m or more makes a surface of the film coarse to cause scattering and reflection of light, decreasing reflective directivity of the obtained film. Also, the fine powder filler with the average particle diameter of 15 $\mu$m or less can help finely form the interface between the aliphatic polyester-based resin and the fine powder filler, providing a film with high light reflecting properties.

In the present invention, an inorganic fine powder and an organic fine powder may be used in combination as fine powder fillers. Two or more fine powder fillers can be used in combination, and for example, the examples using the combination of fine powder fillers include titanium oxide and other fine powder filler; titanium oxide containing 5 ppm or less of vanadium and other fine powder filler.

The fine powder filler such that titanium oxide is preferably blended in the aliphatic polyester-based resin in a dispersed manner. Taking into consideration realizing of the light reflecting property, mechanical properties, and productivity of the film, the content of the fine powder filler, is preferably 10 mass% or more and 60 mass% or less, more preferably 10 mass% or more and less than 55 mass%, particularly preferably 20 mass% or more and 50 mass% or less based on the total mass of the resin composition constituting the reflective film. The fine powder filler with the content of 10 mass% or more can ensure the sufficient area of the interface between the resin and the fine powder fillers, so that the film can be imparted with a high light reflectance. The fine powder filler with the content of 60 mass% or less can ensure the mechanical properties required for the film.

Taking into consideration the reflectance, the aliphatic polyester-based resin reflective film of the present invention preferably has voids inside the film. The void ratio (a ratio in which the voids occupy in the film) is preferably 50% or less, more preferably 5% or more and 50% or less. To improve the reflectance, the void ratio is preferably 20% or more, more preferably 30% or more. When the void ratio is more than 50%, the mechanical strength of the film decrease, so that the film may be broken during film production or the durability of the film such as hear resistance may be insufficient when in use. For example, voids can be formed in a film by drawing the film after addition of the fine powder filler to the composition for producing the film.

The film using titanium oxide as the fine powder filler can achieve high light reflecting property at a lower void ratio. Presumably, this is ascribable to the high refractive index and hence high hiding power of titanium oxide. In addition, if the amount of the filler to be used can be decreased, the number of voids formed by drawing can be also decreased. Therefore, the using of titanium oxide can decreases the number of voids inside the film, so that the mechanical strength of the film can be increased while maintaining its good light reflecting performance. Even when a large amount of the filler is used, a decreased amount of drawing to decrease voids can similarly result in improved mechanical properties of the film. In this way, decreasing the number of voids inside the film is advantageous also in improving dimensional stability of the film. If good light reflecting performance is insured in the film even with small thickness, the film can be used as a reflective film for small, thin liquid crystal displays used in notebook-type computers, portable phones and so on.

When using the fine powder filler other than titanium oxide, the void ratio is preferably 20% or more. When titanium oxide having a vanadium content of 5ppm or less is used, a satisfactory high light reflectance can be attained at low void ratio, therefore, high light reflecting properties can be attained even if there is no void inside film. The film containing titanium oxide with vanadium content of 5ppm or less and in addition having voids can achieve especially high reflectance.

In the present invention, the average reflectance of the surface of the aliphatic polyester-based resin reflective film is in the wavelength of 420 nm to 700 nm preferably 90% or more, more preferably 95% or more. When the average reflectance of the film surface is 90% or more, the film has good reflecting properties and the screen of a liquid crystal display and the like with the film can realize sufficient brightness.

In the present invention, the reflectance of the surface of the aliphatic polyester-based resin reflective film is at a wavelength of 550 nm preferably 95% or more, more preferably 97% or more. The film with the reflectance of 95% or more can exhibit good reflecting properties to realize a clear and bright screen without yellowish color when used in a liquid crystal display and the like.

The reflectance of the surface of the aliphatic polyester-based resin reflective film is in the wavelength of 450 nm preferably 95% or more, more preferably 98% or more. When the reflectance of the film surface is 95% or more, the reflective film has good reflecting properties and the screen of a liquid crystal display and the like with the film can realize sufficient brightness.

In the present invention, even after the film is exposed by ultra violet rays or remained in the atmosphere of 70°C or more, the reflectance of the surface of the film at the wavelength of 450 nm is preferably 94% or more, more preferably 97% or more.

Since yellowish film absorbs the light at the wavelength of 450 nm, the reflectance of such film at the wavelength of 450 nm remarkably decreases. However, when a film is formed by using an aliphatic carbodiimide compound as a hydrolysis prevention agent, even after the film is exposed by ultra violet rays or remained in the atmosphere of 70 °C or more, the film will not deteriorate, and change in yellowness index of the film is slight, in result, a drop in reflectance at the wavelength of 450 nm may be small.

The reflective film preferably retains the excellent reflectance even after it is exposed to ultra violet rays. As mentioned above, the aliphatic polyester-based resin reflective film of the present invention is obtained by using an aliphatic polyester-based resin containing no aromatic ring in the molecular chains, so that the film is not deteriorated by being exposed to ultra violet rays and can retain to have the excellent reflectance.

In recent years, liquid crystal displays have been used as displays for not only personal computers but also car navigation systems and car-mounted small television sets, so that those liquid crystal displays that are resistant to high temperatures and high humidities are demanded. For this reason, it is preferable that aliphatic polyester-based resin reflective films further contain a hydrolysis preventing agent to impart durability to the film.

The hydrolysis preventing agents that can be used advantageously in the present invention include carbodiimide compounds. The preferable carbodiimide compounds are aliphatic carbodiimide compounds, and preferred examples of the carbodiimide compounds include those having a basic structure represented by the following general formula:

$$-(N=C=N-R-)_n-$$

In the above formula, n is an integer of 1 or more, and R represents an organic linking unit. R may be, for example, an aliphatic linking unit, an alicyclic linking unit, or an aromatic linking unit. n is selected appropriately from integers of 1 to 50. When n is an integer of 2 or more, 2 or more of organic linking units of R may be same or different.

Specific examples of the carbodiimide compound include bis(dipropylphenyl)oarbodiimide, poly(4,4'-diphenylmethaneoarbodiimide), poly(p-phenylenecarbodiimide), poly(m-phenylenecarbodiimide), poly(tolyloarbodiimide), poly(diisopropylphenylenecarbodiimide), poly(methyl-diisopropylphenylenecarbodiimide), poly(triisopropylphenylenecarbodiimide), poly(hexamethylenecarbodiimide) and so on, as well as corresponding monomers. These carbodiimide compounds may be used singly or as combinations of two or more of them. Also, as the aliphatic carbodiimide compound, for example, trade name CARBODILITE HMV-8CA manufactured by Nisshinbo Industries, Inc. is commercially available.

The polymerization reaction of the carbodiimide compounds can be stopped in the process by cooling and the like to control the degree of polymerization, and in this case the end group is isocyanate group. By controlling the degree of polymerization, compatibility with the base resin and the like and preservation stability can be improved. The carbodiimide compounds used in the present invention may be those with isocyanate group in the end (thereafter, sometimes, carbodiimide modified isocyanate). For such carbodiimide modified isocyanate, for example, trade name CARBODILITE LA-1 manufactured by Nisshinbo Industries, Inc. is commercially available.

In the present invention, the carbodiimide compound is preferably added in an amount of 0.1 to 3.0 mass parts per 100 mass parts of the aliphatic polyester-based resin constituting the film. When the content of the carbodiimide compound is 0.1 mass part or more per 100 mass parts of the resin, the obtained film can exhibit a sufficiently improved hydrolysis resistance. Also, when the content of the carbodiimide compound is 3.0 mass parts or less per 100 mass parts of the resin, the obtained film is less colored to have high light reflecting properties, and in addition, less yellowing in time to maintain high light reflectivity.

In oars parking under the scorching sun in summer seasons, car navigation systems, car-mounted small television sets and the like are subjected to high temperatures. Further, if liquid crystal display devices are used for many hours, the areas surrounding light source of the devices are subjected to high temperatures. Accordingly, the reflective film used in liquid displays for use in car navigation systems, liquid crystal display devices and the like are required to have heat resistance to temperatures at about 110˚C. That is, the reflective film has a heat shrinkage factor of , preferably 10% or less, more preferably 5% or less when the film is left to stand at a temperature of 120˚C for 5 minutes. When the film has a heat shrinkage factor of more than 10%, the film may cause shrinkage with a lapse of time when used at high temperatures. Therefore, in the case of the reflective film that is laminated on a steel plate or the like, the film alone may be deformed. The film that underwent severe shrinkage may have a decreased surface area for reflection or a reduced porosity within the film, resulting in a decreased reflectance.

To prevent heat shrinkage, it is desirable to allow the crystallization of the film to proceed completely. Since it is difficult to promote the crystallization of the aliphatic polyester-based resin reflective film completely by biaxial drawing only, it is preferable in the present invention that heat fixation treatment be performed after drawing. By promoting the crystallization of the film, it is possible to impart the film with heat resistance and improve the resistance to hydrolysis of the film.

To respond a need for scaling up of liquid crystal displays and the like, larger reflection sheets have been demanded. For example, when a film is incorporated as a reflection sheet in a liquid crystal television set with a large screen, the film is required to serve as a reflective film that exhibits a small change in size after use for a long period of time since the film is used for a long time in a state exposed to light from a light source. Also, in the case of small or medium edge-light-type displays, when used in a state in which the end is constricted, a film that shows a small change in size is demanded. For example, the film has preferably a heat shrinkage factor after retention at 80˚C for 180 minutes of more than 0% and less than 0.7% in a longitudinal direction and -0.1% to 0.5% in a transverse direction. The film has more preferably a heat shrinkage factor of 0.001% or more and 0.3% or less in the transverse direction. Here, the longitudinal direction means a direction that is the same as the direction of flow of the film (direction in which the film is taken up), and the transverse direction means a direction that is perpendicular to the direction of flow of the film.

If the heat shrinkage factor of the reflective film is set to values in the above-mentioned ranges, deformation due to changes with time when used in the back of, for example, a large liquid crystal television set can be prevented, so that the planarity of the film can be retained. For example, by drawing a film and subsequently subjecting the film to relaxation treatment at an outlet of a tenter to impart the film with a predetermined amount of relaxation, the heat shrinkage factor of the aliphatic polyester-based resin reflective film can be set in the above-mentioned ranges after its retention at 80˚C for 180 minutes.

In the present invention, the resin composition may further contain antioxidants, light stabilizers, heat stabilizers, lubricants, dispersants, ultraviolet absorbents, white pigments, fluorescent brighteners, and other additives so far as they do not damage the effects of the present invention.

In the present invention, the aliphatic polyester based resin reflection film can be degraded by microorganisms in a landfill without causing waste problems. In earth filling, the ester bonds in aliphatic polyester based resins are hydrolyzed to reduce the molecular weight of the resin to about 1,000, and the resultant is subsequently biodegraded by microorganisms in the soil.

On the other hand, the aromatic polyester-based resin has high bond stability in the molecule, so that hydrolysis of the ester bonds can hardly take place. Therefore, when the aromatic polyester-based resin are subjected to earth filling, neither their molecular weight is reduced nor their biodegradation by, for example, microorganisms occurs. As a result, various problems occur. For example, the aromatic polyester-based resins remain in the soil for a long time to make the service life of the landfill shorter, and natural landscape and life environment of wild animals and plants are damaged.

Hereinafter, an example of the method of producing an aliphatic polyester-based resin reflective film of the present invention is explained. However, the present invention should not be considered to be limited thereto.

First, a resin composition is prepared by blending an aliphatic polyester-based resin with a fine powder filler, and a hydrolysis preventing agent and other additives as necessary. More particularly, the fine powder filler, and the hydrolysis preventing agent and the like as necessary are added to the aliphatic polyester-based resin. The resultant is mixed in a ribbon blender, a tumbler, a Henschel mixer or the like and then kneaded using a single-screw or a twin-screw extruder or the like at a temperature equal to or higher than the melting temperature of the resin (for example, 170˚C to 230˚C in the case of polylactic acid) to give a resin composition. Alternatively, a resin composition can be obtained by supplying the aliphatic polyester-based resin, the fine powder filler, the hydrolysis preventing agent and the like to the mixer or the like by separate feeders in respective predetermined amounts. Further, the resin composition can also be obtained by preparing in advance a master batch obtained by blending a portion of the aliphatic polyester-based resin with the fine powder filler, and the hydrolysis preventing agent and the like in large concentrations, and mixing the master batch with another portion of the aliphatic polyester-based resin to desired concentrations of the components.

Then, the resin composition thus obtained is melted and formed into a film. For example, the resin composition is dried and then supplied to an extruder, is melted by being heated to a temperature equal to or higher than the melting temperature of the resin. Alternatively, the resin composition can be supplied the extruder without drying. When the resin composition is not dried, it is preferable that a vacuum vent be used when it is melt-extruded. The conditions of extrusion such as extrusion temperature must be set taking into consideration factors, for example, a reduction in molecular weight of the resin due to decomposition. For example, the extrusion temperature is preferably in the range of 170˚C to 230˚C for polylactic acid. Thereafter, the molten resin composition is extruded from a slit-shaped discharge nozzle of a T-die and contacted with a cooling roll to solidify the composition to form a cast sheet.

In the present invention, the resin composition prepared by blending an aliphatic polyester-based resin and a fine powder filler and so on is melted to form a reflective film followed by drawing preferably at least monoaxially 1.1 times or more. By drawing a film, voids inside the film are formed as fine powder fillers become cores, as a result, the light reflecting properties of the film are further improved. Presumably, it is because interfaces between the resins and voids and interfaces between the voids and the fine powder fillers are newly formed to increase the effect of the refraction and scattering at the interfaces.

The reflective film of the present invention is drawn preferably to 5 times or more, more preferably 7 times or more as compared with the original size in terms of area magnification. By drawing the cast sheet 5 times or more in area magnification, a void ratio of 5% or more can be realized in the film. By drawing the cast sheet 7 times or more in area magnification, a void ratio of 20% or more can be realized, and by drawing the cast sheet 7.5 times or more in area magnification, a void ratio of 30% or more can be realized.

The drawing temperature at which a cast sheet is drawn is preferably in the range from about the glass transition temperature of resin (Tg) to the temperature of (Tg+50˚C). For example a polylactic acid, the drawing temperature is preferably 50˚C or more and 90˚C or less. When the drawing temperature is within the above-mentioned range, the film is drawn stably without rupture during drawing, and the drawing orientation becomes higher and the number of voids increases. Thus, a resulting film having high reflectance can be easily obtained.

For example, by drawing the aliphatic polyester-based resin reflective film of the present invention at a draw ratio appropriately selected, voids are formed in the film. This is because the aliphatic polyester-based resin and the fine powder filler such as titanium oxide behave differently during drawing. Hence, when drawing is performed at a drawing temperature suitable for the aliphatic polyester-based resin, the aliphatic polyester-based resin as a matrix is drawn in contrast to the fine powder filler that tends to remain as is, with the result that the separation of the aliphatic polyester-based resin from the fine powder filler occurs at the boundary therebetween to form voids.

Moreover, the reflective film of the present invention is preferably drawn biaxially. By biaxial drawing, the voids ratio of the film becomes higher, further increasing the light reflectivance of the film.

With only monoaxial drawing of the film, the formed voids are in the form of fibers extending in one direction. On the other hand, biaxial drawing of the film gives rise to voids extending in both the longitudinal and transverse directions to give voids in the form of disks. In other words, biaxial drawing increases separation area at the boundary between the resin and the fine powder filler to make whitening of the film to proceed. As a result, the film having food light reflectance can be obtained. The biaxially drawn film does not have heterogeneity in the direction in which the film is shrunk, improving the heat resistance and mechanical strength.

The order of drawing in biaxial drawing is not particularly limited. For example, either simultaneous biaxial drawing or sequential biaxial drawing may be used. After melting film formation using a drawing installation, either drawing of the film in an MD (machine direction, i.e. direction the film is taken up) by roll drawing and subsequent drawing in a TD (transverse direction) by tenter drawing, or biaxial drawing by tubular drawing may be performed.

In the present invention, to impart the aliphatic polyester-based resin reflective film with heat resistance and dimension stability, it is preferable that heat fixation be performed after the drawing. The processing temperature for heat fixation of the film is preferably 90˚C to 160˚C, more preferably 110˚C to 140˚C. Time required for heat fixation is preferably 1 second to 5 minutes. The drawing installation is not particularly limited. However, it is preferable that tenter drawing, in which heat fixation can be performed after drawing, be performed.

The thickness of the aliphatic polyester-based resin reflective film of the present invention is not particularly limited. The thickness is usually about 30 $\mu$m to about 500 $\mu$m and preferably about 50 $\mu$m to about 500 $\mu$m taking into consideration of handleability in practical applications. In particular, the thickness of a reflective film for use as a small, thin reflective plate is preferably 30 $\mu$m to 100 $\mu$m. Reflective films having such a thickness can be used in small, thin liquid crystal displays and the like in, for example, note-type personal computers and cellular phones and the like.

The reflective film of the present invention may be either of a single-layer (monolayer) structure or of a multi-layer structure which, for example, obtained by being laminated two or more layers.

The aliphatic polyester-based resin reflective film of the present invention can be used to form a reflective plate for use in liquid crystal displays and the like. For example, the aliphatic polyester-based resin reflective film can be applied to a metal plate or a resin plate to form a reflective plate. The reflective plate is useful as a reflective plate for use in liquid crystal display apparatus, illumination devices, illumination advertising displays. Hereinafter, an example of a method of producing such a reflective plate is explained.

The methods of covering a metal plate or a resin plate with the reflective film include a method that involves use of an adhesive, a method of heat fusing without using adhesives, a method of bonding through an adhesive sheet, a method of extrusion coating and so on and is not particularly limited. For example, the reflective film can be attached to a metal or resin plate by coating an adhesive made of polyester-based, polyurethane-based, epoxy-based resin or the like on a side of the metal or resin plate on which the reflective film is to be attached and then applying the reflective film on the adhesive. In this method, the adhesive is coated on the surface of the metal plate or the like to which the reflective film is to be applied to a thickness of about 2 $\mu$m to about 4 $\mu$m after drying by using a coating installation usually used, such as a reverse roll coater or a kiss roll coater. Then, the coated surface is dried and heated by an infrared ray heater and a hot-air circulating oven to maintain the surface of the plate at a predetermined temperature while the reflective film is applied promptly to the metal or resin plate by using a roll laminator, followed by cooling to obtain a reflective plate. In this case, it is preferable to maintain the surface of the metal plate or the like at 210˚C or less, since light reflecting properties of the reflective plate can be maintained at high levels. The surface of a metal plate and the like is preferably 160˚C and more.

Recently a reflection film which was applied a process of folding and the like may be used in a liquid crystal display, and the film is required to have good shape stability to maintain the folded shape. Unlike the conventional reflection film having poor shape stability, the present invention can provide a reflection film with high shape stability.

EXAMPLE

Hereinafter, the present invention is explained in more detail by examples. However, the present invention should not be considered to be limited thereto. Instead, various applications or modifications may be made without departing the technical concept of the present invention. Measurements and evaluations in the following examples were performed. Here, the direction in which the film is taken up (direction of flow of film) is indicated by MD and the direction perpendicular thereto is indicated by TD.

(Measurement and Evaluation Methods)

(1) Refractive index

The refractive index of the resins was measured according to the method A of JIS K-7142.

(2) Content of vanadium (ppm) in titanium oxide

Titanium oxide was decomposed by hydrofluoric acid in a microwave sample decomposition apparatus. The quantitative analysis of obtained solution was performed by IPC optical emission spectrometry apparatus.

(3) Average particle diameter

By using a powder specific surface area measuring apparatus (permeation method), model "SS-100" manufactured by Shimadzu Corporation with a sample tube of 2 cm$^2$ in cross section and 1 cm in height, measurement of time in which 20 cc of air was permeated through a 3-g sample packed in the sample tube at 500 mm $H_2O$ was repeated and an average particle diameter of the sample was calculated from the measured values.

(4) Voids ratio (%)

The density of a film before drawing (indicated as "non-drawn film density") and the density of the film after drawing (indicated as "drawn film density") were measured and the measured values were assigned in the following equation to obtain the voids ratio of the film.

$$\text{Voids ratio (\%)} = \{(\text{Non-drawn film density} - \text{Drawn film density})/\text{Non-drawn film density}\} \times 100$$

(5) Yellowness Index (YI-value)

The yellowness index was measured according to JIS K-7103 using a spectrophotometer ("SC-T", manufactured by Suga Test Instrument Co., LTD.). Yellowness indices of reflective films and also of base resins were measured.

(6) Light reflectance (%)

(i) By using a spectrophotometer ("U-4000", manufactured by Hitachi Limited) with an integrating sphere, light reflectance of a sample film for light having a wavelength of 550 nm was measured. Note that before the measurement, the spectrophotometer was set such that the light reflectance of an alumina white plate was 100%.

(ii) By using a spectrophotometer ("U-4000", manufactured by Hitachi Limited) with an integrating sphere, light reflectance of a sample film for light having a wavelength of 450 nm was measured. Note that before the measurement, the spectrophotometer was set such that the light reflectance of an alumina white plate was 100%.

Also, the reflectance of the reflective film after the irradiation of the ultra violet rays for 1,000 hours in a sunshine weatherometer tester (without intermittent water sprays), i.e. the reflectance of the reflective film after irradiation of ultra violet rays, was measured as mentioned above. The reduction of the reflectance after the irradiation of the ultra violet rays ($\Delta R$) was calculated according to the following formula.

$$\Delta R = \text{Reflectance before irradiation of ultra violet rays}$$
$$- \text{Reflectance after irratidation of ultra violet rays}$$

(7) Average reflectance (%) Average reflectance (a wavelength region of 420nm to 700 nm):

By using a spectrophotometer ("U-4000", manufactured by Hitachi, Ltd.) with an integrating sphere, reflectance of a sample film was measured at intervals of 20 nm over a wavelength range of 420 nm to 700 nm. An average value of the measured values in a wavelength region of 420 nm to 700 nm was calculated, and this value was defined as an average reflectance in a wavelength region of 420nm to 700 nm. Before the measurement, the spectrophotometer was adjusted as the reflectance of an alumina white plate is to 100%.

(8) Hydrolysis resistance

In a thermo-hygrostatic chamber held at a temperature of 60°C and a relative humidity of 95% RH, a film was left to stand for 300 hours or 1,000 hours, and then a weight-average molecular weight of the aliphatic polyester-based resin constituting the film was measured. The measured values were assigned in the following equation to obtain a molecular weight retention ratio (%), and evaluated for hydrolysis resistance based on the criteria set out below. Symbols "○" and "△" indicate that the values are equal to or higher than practical levels.

$$\text{Molecular weight retention ratio (\%) =}$$
$$\text{(Weight-average molecular weight after standing/}$$
$$\text{Weight-average molecular weight before standing)} \times 100$$

Criteria of evaluation:

○: Molecular weight retention ratio of 90% or more;
△: Molecular weight retention ratio of 60% or more and less than 90%;
×: Molecular weight retention ratio of less than 60%.

(9) Yellowing preventing properties

Film samples were irradiated with ultraviolet rays for 1,000 hours in a sunshine weatherometer tester (without intermittent water sprays). Thereafter, the surfaces of the film samples were observed with naked eye. By visual judgment, the film sample of which the color of the film surface was judged to be white was indicated as "white", and the film sample of which the color of the film surface was judged to be yellowish was indicated as "yellow".
Also, according to the measurement method described in (6)(i) above, the reflectance (%) of film sample after irradiation of ultraviolet rays was measured

(10) Configuration retention

A configuration retention of the film was evaluated by a deadfold property test as follows.
Sample films of 20 mm wide and 150 mm long were out out taking the longitudinal direction of the film as a width direction and the direction perpendicular thereto as a length direction. One of the shorter sides of the sample film thus obtained was held and another shorter side of the film (the other end), which was free, was folded at an angle of 180˚ at a position of 30 mm from the other end so that the straight line at this position constituted an outer folding line (or an inner folding line), and then a load of 0.15 MPa was applied. After applying a load of 0.15 MPa for 0.5 second, the load was immediately removed, the folded portion was opened, and the other end of the film sample was held by the hand and returned to the original position. Then, the film sample was released from the hand. Subsequently, an angle of the other end that was retained by the folding was measured. That is, an angle formed by the other end with respect to its original position when released from the hand was measured by a protractor. The obtained value is 180˚ at most and 0˚ at least. Larger values mean more excellent deadfold properties, hence the film has a excellent configuration retention.

(11) Processability of reflective plate

Evaluation was made on three items, that is, right angle bending (R = 0 mm), screw contact bending, and square type Erichsen (5 mm) based on the following criteria.
Evaluation criteria:

○: No peel-off of film occurred;
×: Peel-off of film occurred.

(12) Reflectance of reflective plate

The reflectance (%) of reflective plate was measured according to the measurement method described in (6)(i) above.

(13) Heat resistance test

After a film was left to stand in a hot-air circulation oven at 80˚C for 500 hours, a reflectance (%) of the film was measured according to the measurement method described in (6)(ii) above. The measured values of reflectance were assigned in the following formula to obtain a reflectance retention ration (%), and evaluated of heat resistance based on the criteria set out below.

**Reflectance retention ration (%) = (Reflectance after standing / Reflectance before standing) × 100**

Criteria of evaluation:

○: Retention ration of reflectance of 99% or more ;
×: Retention ration of reflectance of less than 99%

Example I

[Example I-1]

(Preparation of resin composition)

Pellets of a polylactic acid-based resin having an weight-average molecular weight of 200,000 ("NW4032D", manufactured by Cargill Dow LLC; D-form content of 1.5%) and titanium oxide with an average particle diameter of 0.25 $\mu$m ("TIPAQUE PF-711", manufactures by Ishihara Sangyo Kaisya, Ltd) were mixed in a ratio of 50 mass% /50 mass% to form a mixture. A hydrolysis prevention agent (bis(dipropylphenyl)carbodiimide) in an amount of 3 mass parts was added to per 100 mass parts of the mixture and mixed. Then, the resultant was formed into pellets by using a twin-screw extruder to prepare a pellet so-called master batch. This master batch and polylactic acid-based resin were mixed in a ratio such that master batch : polylactic acid-based resin = 40 mass% :60 mass% to prepare a resin composition. Thereafter, the resin composition was provided to an extruder preheated at 220°C.

(Formation of film)

The resin composition in a molten state was extruded through a T-die by using an extruder into a sheet and the resultant was cooled and solidified to form a film. The obtained film was biaxially drawn at 65°C, 2.5times the original size in the MD, and 2.8 times the original size in the TD. Thereafter, the drawn sheet was heat-treated at 140°C to obtain a reflective film with thickness of 250 $\mu$m. The obtained reflective film was measured and evaluated for yellowness index (YI), voids ratio, reflectance (i) before irradiation of ultra violet rays, color and reflectance after irradiation of ultra violet rays, hydrolysis resistance, and shape stability. The results are shown in Table 2. The yellowness indices (YI-value) of the base resin and the yellowness indices (YI-value) of the reflective film were respectively the values shown in Table 1.

[Example I-2]

As shown in Table 1, the reflective film having a thickness of 250 $\mu$m was obtained in the same manner as Example I-1, except that titanium oxide with an average particle diameter of 0.24 $\mu$m ("TIPAQUE R-630", manufactured by Ishihara Sangyo Kaisha, Ltd.) was used instead of titanium oxide with an average particle diameter of 0.25 $\mu$m ("TIPAQUE PF-711", manufactured by Ishihara Sangyo Kaisha, Ltd.). The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-3]

As shown in Table 1, the reflective film of having a thickness of 250 $\mu$m was obtained in the same manner as Example I-1, except that barium sulfate with an average particle diameter of 0.7 $\mu$m ("B-55", manufactured by Sakai Chemical Industry Co. , Ltd.) was used instead of titanium oxide with an average particle diameter of 0.25 $\mu$m ("TAIPAQUE PF-711", manufactured by Ishihara Sangyo Kaisha, Ltd.), and except that the master bath and a polylactic acid-based resin were mixed in a ratio of 60 mass% : 40 mass% to prepare a resin composition. The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-4]

As shown in Table 1, the reflective film having a thickness of 250 $\mu$m was obtained in the same manner as Example I-1, except that calcium carbonate with an average particle diameter of 0.15 $\mu$m ("StaVigot-15A", manufactured by Shiraishi Calcium Kaisha, Ltd.) was used instead of titanium oxide with an average particle diameter of 0.25 $\mu$m ("TAIPAQUE FP-711", manufactured by Ishihara Sangyo Kaisha, Ltd.). The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-5]

As shown in Table 1, the reflective film having a thickness of 188 $\mu$m was obtained in the same manner as Example I-1, except that the thickness of the sheet was 188 $\mu$m instead of 250 $\mu$m. The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-6]

The reflective film having a thickness of 100 $\mu$m was obtained in the same manner as Example I-1, except that the film was drawn 3 times the original size in the MD, 3.2 times the original size in the TD; instead of 2.5 times the original size in the MD, and 2.8 times the original size in the TD. The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-7]

As shown in Table 1, the reflective film having a thickness of 250 $\mu$m was obtained in the same manner as Example I-1, except that pellets such that pellets of polylactic acid-based resin with a weight-average molecular weight of 200,000 ("NW5040D", D-form content of 2.2%, manufactured by Cargill Dow LLC) were washed with acetone was used, instead of pellets of polylactic acid-based resin ("NW4032D"). The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Comparative Example I-1]

As shown in Table 1, the reflective film having a thickness of 250 $\mu$m was obtained in the same manner as Example I-1, except that pellets of polylactic acid-based resin with a weight-average molecular weight of 200,000 ("NW5040D", D-form content of 2.2%, manufactured by Cargill Dow LLC) was used instead of pellets of polylactic acid-based resin ("NW4032D", manufactured by Cargill Dow LLC). The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Comparative Example I-2]

As shown in Table 1, the reflective film having a thickness of 250 $\mu$m was obtained in the same manner as Example I-2, except that pellets of polylactic acid-based resin with a weight-average molecular weight of 200,000 ("NW5040D", D-form content of 2.2%, manufactured by Cargill Dow LLC) were used instead of pellets of polylactic acid-based resin ("NW4032D", manufactured by Cargill Dow LLC). The obtained reflective film was measured and evaluated in the same manner as that Example I-1. The results are shown in Table 2. The yellowness indices (YI-value) of the base resin and the yellowness indices (YI-value) of the reflective film were respectively the values shown in Table 1.

[Example I-8]

The reflective film obtained in Example I-1 was applied to a galvanized sheet metal (0.45 mm thick) by the following procedure to prepare a reflective plate. That is, first a commercially available polyester-based adhesive was coated on a surface of the steel on which the reflective film was to be applied to a thickness of adhesive of about 2 to 4 $\mu$m after drying. Then, the coated surface was dried and heated by using an infrared heater and a hot-air oven. While maintaining the surface temperature of the steel at 180°C, the reflective film was immediately applied to the surface of the steel by using a roll laminator and the resultant was cooled to prepare a reflective plate. The obtained reflective plate was measured and evaluated for processability of reflective plate and reflectance of reflective plate. The results obtained are shown in Table 3.

[Example I-9]

A reflective plate was prepared in the same manner as in Example 8 except that the surface temperature of the steel was maintained at 220°C instead of 180°C. The obtained reflective plate was measured and evaluated in the same manner as in Example 8. The results obtained are shown in Table 3.
[Table 1]

| | Resin | Fine Powder Filler | | | | Yellowness-Index (YI-value) | Sheet Thickness (μm) |
| | Yellowness Index (YI-value) | Kind | Average Particle Diameter (μm) | Inert Inorganic Oxide | Vanadium Content (ppm) | | |
|---|---|---|---|---|---|---|---|
| Example I-1 | 7.35 | A | 0.25 | A,B | 1 | 3.0 | 250 |
| Example I-2 | 7.35 | B | 0.24 | A | 6 | 3.1 | 250 |
| Example I-3 | 7.35 | C | 0.7 | - | - | 3.3 | 250 |
| Example I-4 | 7.35 | D | 0.15 | - | - | 3.1 | 250 |
| Example I-5 | 7.35 | A | 0.25 | A,B | 1 | 2.6 | 188 |
| Example I-6 | 7.35 | A | 0.25 | A,B | 1 | 2 | 100 |
| Example I-7 | 11.5 | A | 0.25 | A,B | 1 | 3.4 | 250 |
| Comparative Example I-1 | 21.5 | A | 0.25 | A,B | 1 | 3.7 | 250 |
| Comparative Example I-2 | 21.5 | B | 0.24 | A | 6 | 3.8 | 250 |

Kinds of fine powder filler:

   a: TAIPAQUE PF711; Rutile type crystalline titanium oxide manufactured by Ishihara Sangyo Kaisya, Ltd.
   b: TAIPAQUE R630; Rutile type crystalline titanium oxide manufactured by Ishihara Sangyo Kaisya, Ltd.
   c: B-55; barium sulfate manufactured by Sakai Chemical Industry Co., Ltd.
   d: StaVigot-15A; calcium carbonate manufactured by Shiraihsi Calcium Kaisya, Ltd.

Kinds of Inert Inorganic oxide

   A: alumina
   B: silica
   C: zirconia

[Table 2]

| | Voids ratio (%) | Reflectance (%) | Hydrolysis Resistance | yellowing Preventing property | | Shape Stability |
| | | | | Color | Reflectance (%) | |
|---|---|---|---|---|---|---|
| Example I-1 | 14 | 99.0 | ○ | White | 97.3 | 95 |
| Example I-2 | 15 | 96.0 | ○ | White | 93.0 | 95 |
| Example I-3 | 30 | 97.5 | ○ | White | 96.2 | 95 |
| Example I-4 | 32 | 97.5 | Δ | White | 96.6 | 95 |
| Example I-5 | 14 | 98.6 | ○ | White | 97.5 | 95 |
| Example I-6 | 17 | 98.4 | ○ | White | 96.6 | 95 |
| Example I-7 | 14 | 98.0 | ○ | White | 96.8 | 95 |
| Comparative Example I-1 | 15 | 94.0 | ○ | White | 92.0 | 95 |

(continued)

| | Voids ratio (%) | Reflectance (%) | Hydrolysis Resistance | yellowing Preventing property | | Shape Stability |
| --- | --- | --- | --- | --- | --- | --- |
| | | | | Color | Reflectance (%) | |
| Comparative Example I-2 | 14 | 93.5 | ○ | White | 92.0 | 95 |

[Table 3]

| | Processability of Reflective Plate | | | Reflectance of Reflective Plate (%) |
| --- | --- | --- | --- | --- |
| | Right Angle Bending | Screw Bending | Erichsen | |
| Example I-8 | ○ | ○ | ○ | 98.0 |
| Example I-9 | ○ | ○ | ○ | 94.0 |

Table 1 and Table 2 indicate that the reflective films of Examples I-1 to I-7 of the present invention have yellowness index (YI-value) of less than 3.6, high reflecting properties such as reflectance of 95% or more, and high clearness and brightness. Also, the reflective films of Examples I-1 to I-7 had reflectance of 93% or more even after the irradiation of ultraviolet rays, and had a color of white in the evaluation, thus showing excellent yellowing pending property. Among them, the reflective films of Example I-1, and Examples I-3 to I-7 had a reflectance of 97% or more before the irradiation of the ultra violet rays (reflectance at initial stage) and also a reflectance of 95% or more after the irradiation of the ultra violet rays, both being excellent. Also the films of Examples I-1 to I-7 were evaluated as more than the practical level in the hydrolysis resistance. Hence, the films of Examples I-1 to I-7 of the present invention showed excellent results in all evaluations.

On the other hand, it revealed that the reflective film of Comparative Examples I-1 and I-2 had the yellowness indices (YI-value) of 3.7 or more, and had a reflectance of less than 95% were inferior to the reflective films of Examples I-1 to I-7 in view of light reflecting properties.

Table 3 indicates that the reflective plate of Example I-8 retained sufficient adhesion required for processing and high reflectance, and had excellent properties. Also, the reflective plate of Example I-8 was superior in maintaining light reflecting properties to the reflective plate of Example I-9.

As described in detail in the foregoing, according to the present invention, a reflective film that has excellent light reflecting property, does not undergo yellowing or deterioration in the light reflectance during use and have excellent shape stability. Moreover, the reflective film of the present invention, which uses aliphatic polyester-based resins as base resins, are biodegradable.

Example II

[Example II-1]

(Preparation of resin composition)

Pellets of a polylactic acid-based resin having an weight-average molecular weight of 200,000 ("NW4032D", manufactured by Cargill Dow LLC; D-form content of 1.5%) and titanium oxide with an average particle diameter of 0.25 μm ("TIPAQUE PF-711"; vanadium content of 5 ppm, manufactures by Ishihara Sangyo Kaisya, Ltd,) were mixed in a ratio of 50 mass% /50 mass% to form a mixture. A hydrolysis prevention agent, carbodiimide modified isocyanate, ("Carbodilite LA-1", manufactured by Nisshinbo Industries, Inc.) in an amount of 3 mass parts was added to per 100 mass parts of the mixture and mixed. Then, the resultant was formed into pellets by using a twin-screw extruder to prepare a pellet so-called master batch. This master batch and polylactic acid-based resin were mixed in a ratio such that master batch : polylactic acid-based resin = 40 mass% : 60 mass% to prepare a resin composition. Thereafter, the resin composition was provided to an extruder preheated at 220˚C.

(Formation of film)

The resin composition in a molten state was extruded through a T-die by using an extruder into a sheet and the resultant was cooled and solidified to form a film. The obtained film was biaxially drawn at 65˚C, 2.5times the original size in the MD, and 2.8 times the original size in the TD. Thereafter, the drawn sheet was heat-treated at 140˚C to obtain a reflective film with thickness of 250 μm. The obtained reflective film was measured and evaluated for voids ratio, average ref lectance , reflectance before and after irradiation of ultra violet rays, yellowness index (YI), yellowing preventing properties (color),hydrolysis resistance and heat resistance. The results are shown in Table 4. The voids ratio of the reflective film was 14%.

[Example II-2]

A master batch was prepared to form a resin composition in the same manner as Example II-1, except that as the hydrolytic prevention agent, 1.5 mass parts of aliphatic Carbodilite ("Carbodilite HMV-8CA") was used instead of 3 mass parts of "CarbodiliteLA-1", and then a reflective film having a thickness of 250pm in the same manner as Example II-1. The obtained reflective film was measured and evaluated in the same manner as that Example II-1. The results are shown in Table 4. The voids ratio of the reflective film was 14%.

[Example II-3]

The reflective film obtained in Example II-1 was applied to a galvanized sheet metal (0.45 mm thick) by the following procedure to prepare a reflective plate. That is, first a commercially available polyester-based adhesive was coated on a surface of the steel on which the reflective film was to be applied to a thickness of adhesive of about 2 to 4 μm after drying. Then, the coated surface was dried and heated by using an infrared heater and a hot-air oven. While maintaining the surface temperature of the steel at 180˚C, the reflective film was immediately applied to the surface of the steel by using a roll laminator and the resultant was cooled to prepare a reflective plate. The obtained reflective plate had excellent processability and high reflectance.
[Table 4]

|  | Average Reflectance (%) | Reflectance (450 nm) (%) | Yellowness Index (YI-value) | Yellowing preventing property | AR | Heat Resistance | Hydrolysis Resistance |
|---|---|---|---|---|---|---|---|
| Example II-1 | 98.2 | 99.2 | 2.7 | White | 0.5 | ○ | ○ |
| Example II-2 | 98.0 | 99.0 | 2.8 | White | 0.6 | ○ | Δ |

Table 4 indicates that the reflective films of the Example II-1 and Example II-2 of the present invention had high light reflecting properties such as average reflectance of 98% or more respectively, and the surface reflectance of the film at the wavelength of 450 nm of 95% or more respectively. Also, the reflective films had excellent reflectance after the irradiation of ultra violet rays, and exhibited ΔR of 1.3 or less respectively as a drop rate of the reflectance. The films are evaluated as white after the irradiation of ultra violet rays, and have good yellowing prevention property, and had excellent heat resistance. The films had hydrolysis resistance better than the practical level. The reflective films of Examples II-1 and Example II-2 used as a hydrolysis preventing agent, an aliphatic carbodiimide compound contained no aromatic rings, limiting the drop in reflectance ΔR to be small even after the irradiation of ultra violet rays. Among the Examples, Example II-1 using carbodiimide modified isocyanate which has isocyanate at the end of carbodiimide compound as a hydrolysis prevention agent had excellent hydrolysis preventing property. The reflective films of Examples II-1 and II-2 also had excellent shape stability.
That is, according to the present invention, a reflective film that has an excellent light reflectance, that does not undergo yellowing or a decrease in light reflectance with time when in use, and has an excellent heat resistance and hydrolysis preventing property. Moreover, the reflective films of the present invention, which uses aliphatio polyester-based resins as base resins, are biodegradable.

INDUSTRIAL APPLICABILITY

The present invention is applicable to reflective films and reflective plates that are used in liquid crystal display devises, lighting apparatus, illuminated signs and so on and as reflective films in similar fields. Further, the reflective

## EP 1 813 969 A1

films of the present invention can be utilized as reflective films of which high light reflectance is required and as reflective films of which small thicknesses are required.

**Claims**

1.  An aliphatic polyester-based resin reflective film formed by a resin composition, wherein the resin composition contains an aliphatic polyester-based resin and a fine powder filler, and wherein a yellowness index (YI-value) of the reflective film is less than 3.6.

2.  The aliphatic polyester-based resin reflective film according to claim 1, wherein the fine powder filler contains at least one fine powder filler selected from the group consisting of calcium carbonate, barium sulf ate, titanium oxide, and zinc oxide.

3.  The aliphatic polyester-based resin reflective film according to claim 2, wherein the titanium oxide has a vanadium content of 5 ppm or less.

4.  The aliphatic polyester-based resin reflective film according to any one of claims 2 to 3, wherein a surface of the titanium oxide is coated with at least one inert inorganic oxide selected from the group consisting of silica, alumina, and zirconia.

5.  The aliphatic polyester-based resin reflective film according to any one of claims 1 to 4, wherein a content of the fine powder filler is 10 mass% or more and 60 mass% or less in the resin composition.

6.  The aliphatic polyester-based resin reflective film according to any one of claims 1 to 5, wherein a refractive index of the aliphatic polyester-based resin is less than 1.52.

7.  The aliphatic polyester-based resin reflective film according to any one of claims 1 to 6, wherein the aliphatic polyester-based resin is a polylactic acid-based resin.

8.  The aliphatic polyester-based resin reflective film according to any one of claims 1 to 7, wherein a yellowness index (YI-value) of the aliphatic polyester-based resin is 20 or less.

9.  The aliphatic polyester-based resin reflective film according to any one of claims 1 to 8, wherein the aliphatic polyester-based resin reflective film has voids inside of the film in amount of void ratio of 50% or less.

10. The aliphatic polyester-based resin reflective film according to any one of claims 1 to 9, wherein a reflectance of the surface of the film is 95% or more for light at a wavelength of 550 nm.

11. The aliphatic polyester-based resin reflective film according to any one of claims 1 to 10, wherein the film is made of a resin composition containing a hydrolysis preventing agent composed of an aliphatic carbodiimide compound.

12. The aliphatic polyester-based resin reflective film according to claim 11, wherein the hydrolysis preventing agent is a carbodiimide compound having an isocyanate group at the end thereof.

13. The aliphatic polyester-based resin reflective film according to claim 11 or claim 12, wherein a content of the hydrolysis preventing agent is within the range of 0.1 mass parts or more and 3.0 mass parts or less per 100 mass parts of the aliphatic polyester-based resin.

14. The aliphatic polyester-based resin reflective film according to any one of claims 11 to 13, wherein a reflectance of a surface of the film is 95% or more for light at a wavelength of 450nm.

15. The aliphatic polyester-based resin reflective film according to any one of claims 1 to 14, wherein the aliphatic polyester-based resin reflective film is a film obtained by melting the resin composition comprising the aliphatic polyester-based resin and the fine powder filler, and molding the melt into a film, and drawing the resultant film at least monoaxially 1.1 times or more.

16. A reflective plate comprising an aliphatic polyester-based resin reflective film according to any one of claims 1 to 15.

**17.** A reflective plate according to claim 16, wherein the reflective plate is used for a liquid crystal display device, a lightning apparatus, or an illumination sign.

## INTERNATIONAL SEARCH REPORT

| International application No. |
| --- |
| PCT/JP2005/020590 |

A. CLASSIFICATION OF SUBJECT MATTER

*G02B5/08*(2006.01), *C08J9/00*(2006.01), *C08K3/22*(2006.01), *C08K3/26*(2006.01), *C08K3/30*(2006.01), *C08K9/02*(2006.01), *C08L67/00*(2006.01), *G02F1/1335*(2006.01)

According to International Patent Classification (IPC) or to both national classification and IPC

B. FIELDS SEARCHED

Minimum documentation searched (classification system followed by classification symbols)

*G02B5/08*(2006.01), *C08J9/00*(2006.01), *C08K3/22*(2006.01), *C08K3/26*(2006.01), *C08K3/30*(2006.01), *C08K9/02*(2006.01), *C08L67/00*(2006.01), *G02F1/1335*(2006.01)

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2003-4913 A (Toyobo Co., Ltd.), 08 January, 2003 (08.01.03), Full text; all drawings (Family: none) | 1-17 |
| A | WO 03/029850 A1 (YUPO CORP.), 10 April, 2003 (10.04.03), Full text; all drawings & JP 2003-207609 A | 1-17 |
| A | JP 2004-50607 A (Sumitomo Chemical Co., Ltd.), 19 February, 2004 (19.02.04), Full text; all drawings (Family: none) | 1-17 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 February, 2006 (22.02.06) | Date of mailing of the international search report<br>07 March, 2006 (07.03.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**EP 1 813 969 A1**

**INTERNATIONAL SEARCH REPORT**

| International application No. |
| --- |
| PCT/JP2005/020590 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-147180 A  (New Japan Chemical Co., Ltd.), 21 May, 2003 (21.05.03), Full text; all drawings (Family: none) | 1-17 |
| A | JP 2004-149692 A  (Kanebo, Ltd.), 27 May, 2004 (27.05.04), Full text; all drawings (Family: none) | 1-17 |
| A | US 2002/0102367 A1  (Kiichi SHIMODAIRA), 01 August, 2002 (01.08.02), Full text; all drawings & JP 2002-347161 A | 1-17 |

Form PCT/ISA/210 (continuation of second sheet) (April 2005)

21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002138150 A
- JP 4239540 A
- JP 11174213 A